# EUROPEAN PATENT SPECIFICATION

(11) **EP 3 849 061 B1**
(45) Date of publication and mention of the grant of the patent: **22.02.2023**
(21) Application number: 19851941.5
(22) Date of filing: 17.04.2019
(51) Int. Cl.: H02K 5/04, H02K 5/20, F02B 63/04, H02K 7/18

(54) **MOBILE POWER GENERATION DEVICE ON RAILWAY**
MOBILE ENERGIEERZEUGUNGSVORRICHTUNG AUF SCHIENEN
DISPOSITIF DE GÉNÉRATION D'ÉNERGIE MOBILE SUR VOIE FERRÉE

(30) Priority: 22.08.2018 CN 201810961483
(43) Date of publication of application: 14.07.2021
(73) Proprietor: CRRC Yangtze Co., Ltd., Wuhan, Hubei 430212 (CN)
(72) Inventor: SHU, Lin, Wuhan, Hubei 430212 (CN); GAO, Jianhua, Wuhan, Hubei 430212 (CN); JING, Chuanfeng, Wuhan, Hubei 430212 (CN); HE, Yuanxin, Wuhan, Hubei 430212 (CN); LIU, Fengwei, Wuhan, Hubei 430212 (CN); HU, Haibin, Wuhan, Hubei 430212 (CN); MA, Pengchao, Wuhan, Hubei 430212 (CN); JIN, Xiaoping, Wuhan, Hubei 430212 (CN); SUN, Chunxu, Wuhan, Hubei 430212 (CN); ZHANG, Min, Wuhan, Hubei 430212 (CN); HUAGN, Sheng, Wuhan, Hubei 430212 (CN); LUO, Guiqiong, Wuhan, Hubei 430212 (CN); XIA, Ming, Wuhan, Hubei 430212 (CN); XIE, Bin, Wuhan, Hubei 430212 (CN); WU, Dong, Wuhan, Hubei 430212 (CN); SHI, Zhenchang, Wuhan, Hubei 430212 (CN)
(74) Representative: Bandpay & Greuter
(86) International application number: PCT/CN2019/082954
(87) International publication number: WO 2020/038001

(56) References cited:
- CN-A- 104 165 093
- CN-A- 107 191 017
- CN-A- 107 191 017
- CN-A- 108 768 045
- CN-U- 205 970 834
- US-A1- 2008 185 048
- US-B2- 7 451 708
- Zhou Zengguang; Yuan Ning; Chen Wenxing; Chen Rong; Xu Jiao: "The Manufacturing Process for Novel Generator Box of 40ft Rail Transport", Internal Combustion Engine & Parts, 15 June 2018 (2018-06-15), pages 116-117, XP009522543, CN ISSN: 1674-957X, DOI: 10.19475/j.cnki.issn1674-957x.2018.11.057
- GAO Jianhua; SHU Lin: "Innovative air inlet louver design for generating container of rail transport", Containerization, vol. 29, no. 4, 28 April 2018 (2018-04-28) , pages 27-28, XP009522544, ISSN: 1005-5339, DOI: 10.13340/j.cont.2018.04.007

## Description

### TECHNICAL FIELD

The application belongs to the technical field of power generation apparatus, and in particular to a mobile power generation apparatus on railway.

### BACKGROUND OF THE APPLICATION

There are many types of containers. According to use of the containers, they can be divided into general container, ventilated container, dry bulk container, thermal container, thermal insulation container, platform container, tank container, and special container. Power generation containers are a kind of special containers. Generally, a generator set is placed in the power generation container, and engine of the generator set uses diesel or natural gas as fuel. There is a sound insulation and noise reduction layer inside the power generation container, and the noise emission index of the generator set should meet the corresponding national standards.

The diesel generator set in the vehicle outputs power to the outside, and the oil tank disposed on the vehicle provides fuel for the generator set. As mobile power generation apparatus on railway is used in large areas in the country and is used around the clock, diesel consumption is relatively larger, and a relatively larger oil tank is required. At present, two rectangular oil tanks are disposed on the mobile power generation apparatus on railway. The two rectangular oil tanks are communicated by connecting pipes, and the connecting pipes are laid on the iron floor in the rectangular oil tank. With this method, the volume of the oil tank is increased by increasing the number of oil tanks. In this way, on the one hand, the oil tank consumes a lot of raw materials. On the other hand, the oil tanks are communicated by added connecting pipes. Due to the complexity of the connecting pipes, the leakage points of the rectangular oil tank increase. Therefore, in the case of limited internal space of mobile power generation apparatus on railway, the oil tank of a traditional structure occupies too much space, which can no longer meet the installation requirements of various parts in the tank.

With the development of China's railway cold chain logistics industry, a large number of power generation apparatus will be used on railways. Due to the characteristics of railway operation, power generation apparatus must be mobile. However, the existing stationary power generation apparatus is only lifted once or twice during transportation, and will not be moved again after installation. Therefore, the existing stationary power generation apparatus does not have sufficient side wall strength and does not have the function of noise reduction.

In addition, the existing air intake louver on the container-type power generator box generally uses louver bar assemblies having an upper and lower structure. The louver bar assemblies of the upper and lower structure have problems such as small air inlet area and poor rainproof effect. However, because the container-type power generator box is provided with a diesel engine inside, it is required to have a larger amount of air intake; and the diesel engine will generate negative pressure during operation, which has the effect of inhaling rainwater. Therefore, how to prevent rainwater from entering the container-type power generator box is a problem that needs to be solved. In addition, due to the boundary limiting requirements of the container-type power generator box, all parts installed on the container-type power generator box cannot exceed corner fittings of the container-typed power generator box. When the air intake louver is installed by a conventional installation method, it is susceptible to exceeds the boundary limit of the container-type power generator box due to error.

At the same time, ordinary container oil filler windows are outward-opening oil filler windows, and the operators operate from outside the container. However, because railway containers run on railways, the requirements for their boundary limit are very strict. The outward-opening oil filler windows will exceed the railway boundary limits when they are opened, which will cause a big security risks. In addition, the outward-opening oil filler windows are generally installed at ends on the side of the container, and it will exceed the boundary limit of the corner fittings when being opened, which is prone to cause security risks during railway operation. Chinese application CN107191017A, for example, discloses a container-type electricity generation apparatus for railway transportation, comprising a box body, two diesel generator units, a fuel oil device, a fire-fighting system and two electric devices, wherein the fuel oil device comprises two main oil tanks mounted in the middle of a box bottom frame assembly, and one of the main oil tanks communicates with the other main oil tank through the corresponding oil tank connection pipeline.

### SUMMARY OF THE APPLICATION

The present disclosure is intended to overcome the disadvantages in the prior art and provides a mobile power generation apparatus on railway that can fully improve space utilization rate in a casing and has good stability.

In a first aspect, the mobile power generation apparatus on railway according to one or more embodiments of the present disclosure comprises a casing, two sets of diesel generator sets, an oil fuel device, a fire fighting system, an electric device and two air exhaust devices; wherein the two sets of diesel generator sets, the oil fuel device, the fire-fighting system, the electric device and the two air exhaust devices are all disposed in a cavity of the casing. The casing comprises an underframe component, two end wall components, two side wall components and an upper cover. An oil tank fixed on a bottom plate of the underframe component by bolts has a U-shaped cross section. The oil tank comprises a bottom oil tank, a left oil tank disposed on a left side of a top surface of the bottom oil tank and communicated with the bottom oil tank, and a right oil tank disposed on a right side of the top surface of the bottom oil tank and communicated with the bottom oil tank; a U-shaped cavity is enclosed by an inner vertical surface of the left oil tank, an inner vertical surface of the right oil tank, and the top surface of the bottom oil tank; a distance from a top plate of the oil tank to an inner top of the casing is 1/3 to 1/2 of a height of the oil tank.

In some embodiments of the present disclosure, a U-shaped space inside the oil tank is lined with a frame around, and outer side plates and outer end plates around the oil tank are all fixed on the frame; each outer side plate is formed by connecting an upper outer side plate and a lower outer side plate, and each outer end plate is formed by connecting a lower U-shaped plate, an upper left end plate and an upper right end plate; an inner wall of the U-shaped cavity of the oil tank is formed by connecting an inner U-shaped plate, an upper left inner plate and an upper right inner plate; a plurality of anti-wave plates are disposed in the U-shaped space of the oil tank; the anti-wave plates in a lower layer are fixed on a bottom surface of the bottom oil tank, and the anti-wave plates in an upper layer is fitted on a crossbeam of the frame.

In some embodiments of the present disclosure, the side wall component comprises a side wall body, an air intake louver installed in an air intake louver frame of the side wall body, an antenna box installed on the side wall body, an oil filler window disposed on an oil filler window support frame of the side wall body, and an air intake device installed on an air intake window frame of the side wall body; the side wall body comprises an upper side beam square steel, an upper side beam welded to a top surface of the upper side beam square steel, a lower side beam, a side wall plate, and a noise reduction plate attached to the side wall plate; an upper end of the side wall plate is welded to the upper side beam square steel, and a lower end of the side wall plate is welded to the lower side beam. The noise reduction plate comprises a galvanized steel plate shell, non-woven fabric laid on an inner bottom surface of the galvanized steel plate shell, and rock wool filled inside the galvanized steel plate shell; a L-shaped interface is formed at each of top and bottom ends of the noise reduction plate. The L-shaped interface at the top end of the noise reduction plate is matched with the upper side beam square steel, and a top surface of the L-shaped interface abuts on a lower surface of the upper side beam. The L-shaped interface at the bottom end of the noise reduction plate is matched with the lower side beam, and a bottom surface of the L-shaped interface abuts on an iron floor; end surfaces of the L-shaped interfaces at the top and bottom ends of the noise reduction plate are provided with elastic pieces.

In some embodiments of the present disclosure, the air intake louver comprises a louver frame enclosed by an upper frame, a left frame, a right frame, a lower frame, a rear vertical plate, and a louver bar assembly installed inside the louver frame; the upper frame comprises an upper perforated plate and an upper fixed plate; the left frame comprises a left frame body and a left perforated plate installed on the left frame body, and the right frame comprises a right frame body and a right perforated plate installed on the right frame body; the lower frame comprises a lower fixed plate and a bottom oblique connection plate connected to the lower fixed plate, and a diversion cavity is confined by the rear vertical plate, the lower frame and the louver bar assembly. The louver bar assembly comprises a row of inner louver bars welded on an inner side of the louver frame and a row of outer louver bars welded on an outer side of the louver frame. The inner louver bars and the outer louver bars are arranged evenly and alternately back and forth.

In some embodiments of the present disclosure, the rear vertical plate, the left frame, the right frame, the upper fixed plate and the lower frame are bolted or welded to form a frame body, and the bottom oblique connection plate of the lower frame is connected to a bottom side of the rear vertical plate through a transition curved plate. There are side gaps for installing a guard plates between a left end of the louver bar assembly and the left frame, and between a right end of the louver bar assembly and the right frame. The guard plate comprises a vertical front guard plate body, a side guard plate connected to the vertical front guard plate body, and a guard plate flange folded along an edge of the side guard plate; the vertical front guard plate body on the left side is connected to a front edge of the left frame, and the side guard plate on the left is connected to a left end of the louver bar assembly; the vertical front guard plate body on the right is connected to a front edge of the right frame, and the side guard plate on the right is connected to a right end of the louver bar assembly; the guard plate flanges of the two side guard plates are arranged oppositely; a water baffle is arranged on each of left and right sides inside the louver frame; the water baffle comprises a welded plate welded to an inner wall of the rear vertical plate, a vertical water baffle body connected to the welded plate, and a water baffle flange folded along an edge of the vertical flap body; the water baffle flanges of the two water baffles are arranged oppositely; the water baffle flange of the water baffle is flush with the guard plate flange of the guard plate, or the vertical water baffle body of the water baffle and the side guard plate of the guard plate partially overlap to form a second filtration zone.

In some embodiments of the present disclosure, a louver bar notch is formed at a bottom of each outer louver bar, and there is a first gap between the louver bar notch and the lower fixed plates of the lower frame; a guard plate notch is formed at a bottom of each of the two guard plates, and there is a second gap between the guard plate notch and the lower fixed plate of the lower frame.

In some embodiments of the present disclosure, the air intake device comprises an air intake window, an air intake pipe, an air intake hood communicating the air intake window and the air intake pipe, and a filter screen located behind a louver and fixed on the back of a window frame. The air intake window comprises the window frame and a plurality of louver sheets installed in the window frame, and the plurality of louver sheets are arranged and stacked along a width direction of the window frame; each louver sheet comprises an inclined plate, a rear baffle disposed on a rear edge of the inclined plate, and a front baffle disposed on a front edge of the inclined plate; the rear baffle and the front baffle are arranged in an opposite directions; the front baffle of one louver sheet of every two adjacent louver sheets and the rear baffle of another louver sheet completely overlap or partially overlap to form a first air swirling region.

In some embodiments of the present disclosure, the air intake hood comprises a hood shell and a baffle assembly disposed in the hood shell; a front end surface of the hood shell is fixedly connected to a back surface of the window frame, and an air ventilation hole at a rear end of the hood shell is fixedly connected to the air intake pipe; the baffle assembly comprises one upper baffle and one lower baffle, and there is a gap between the upper baffle and the lower baffle; the upper baffle and the lower baffle partially overlap to form a second air swirling region, and the upper baffle and the lower baffle are both arranged in parallel with the window frame of the air intake window.

In some embodiments of the present disclosure, the oil filler window is an inward-opening oil filler window; the inward-opening oil filler window comprises an oil filler window frame embedded in the oil filler window support frame of the side wall body, an oil filler window body embedded inside a portal of the oil filler window frame through a hinge, and a door lock disposed on the oil filler window body; a fixed end of the hinge is fastened on one side of an inner surface of the oil filler window frame, and a connection end of the hinge is fastened on one side of the inner surface of the oil filler window body; a door lock body of the door lock is fastened on another side of the inner surface of the oil filler window body, and a fixing seat of the door lock is fastened on another side of the inner surface of the oil filler window frame; an outer surface of the oil filler window frame is flush with an outer surface of the side wall body. A circle of 9-shaped rubber strip is installed around the portal of the oil filler window frame, and a hollow cylindrical portion of the 9-shaped rubber strip is disposed on an outer side of the portal of the oil filler window frame; a flat portion of the 9-shaped rubber strip is disposed on an inner side of the portal of the oil filler window frame and attached to an inner wall of the portal of the oil filler window frame.

In some embodiments of the present disclosure, a plurality of water leakage holes are formed on a lower crossbeam at a bottom of the oil filler window frame. A water retaining strip is installed on a bottom surface of the portal of the oil filler window frame and located on an inner side of the oil filler window frame, and a length of the water retaining strip is equal to a width of the portal of the oil filler window frame.

Compared with the prior art, the mobile power generation apparatus on railway provided according to one or more embodiments of the present disclosure have at least the following technical effects or advantages:
1) Compared with the oil tanks in the traditional railway power generation apparatus, the number of the oil tanks according to the present disclosure is reduced, and accordingly communication pipelines between the oil tanks are reduced, thereby making the structure of the oil tanks more compact, reducing occupation space for the oil tanks, and making it possible to fully use the space for a mobile power generation apparatus. The skeleton framework of the oil tanks adopts a frame structure, which increases the strength and rigidity, and has good impact resistance. The frame is set in the U-shaped space of the oil tank; the outer side plate, the outer end plate and the inner wall of the U-shaped cavity of the oil tank are all composed of upper and lower portions, and the upper and lower portions of the outer side plate and the outer end plate are respectively welded to the middle crossbeam of the frame and then simultaneously butt-welded, which has good manufacturability. In addition, the overall height of the oil tank is reduced, thereby lowering the center of gravity of the oil tank and providing better stability .
2) The bottom surface of the upper side beam in the side beam body is connected with the upper side beam square steel, and the upper side beam square steel is connected to the end wall corner fittings of the casing of the mobile power generator apparatus on railway, which greatly improves the strength of the side wall. The noise reduction plate is covered on the side wall plate, and the noise reduction problem of the mobile power generation apparatus on railway is solved.
3) The louver frame of the air intake louver is a square structure, which overcomes the defect that the rear opening of the traditional louver is too large and occupies too much space in the casing; in addition, the total area of air inlet of the air intake louver is increased by setting a perforated plate, which overcomes the defect that an air intake area is small due to the rectangular parallelepiped shape of the louver frame; moreover the perforated plate can also filter rainwater and prevent foreign matter from entering the louver. The water baffles and guard plates are provided to form a second filtration zone, so that the inflow rainwater will impact on the water baffles and flow down along the water baffles, while air will make a detour through the second filtration zone and form a whirling air intake again, further preventing rainwater from entering the louver.
4) In the air intake window, a first air swirling region is formed between every two adjacent louvers, so that the water and dust in air can be separated, and the water and dust can flow out of the window along the louvers to realize a first filtration. At the same time, the filter screen on the back of the window frame can effectively block catkins. There is a gap between the upper baffle and the lower baffle in the air intake hood, and the upper baffle and the lower baffle partially overlap, which can form a second air swirling region on the basis of satisfying requirement of effective air intake area, so that the intake air presents an "S" swirling airflow, which can further effectively remove the water and dust contained in air during the air intake process so as to complete a second filtration. After the second filtration, the content of rain and dust in the intake air is greatly reduced, thus the purpose of preventing dust and rain is achieved. On the premise of ensuring the same air intake area, an opening area of a louver type air intake window in the side wall is smaller than an opening area of a cyclone type air filter, which is beneficial for the mobile power generation apparatus on railway to arrange openings of various windows on the side wall.
5) The use of inward-opening oil filler windows prevents the oil filler windows from exceeding the railway boundary limit. When the oil filler windows are not closed or loosen, they move inside the mobile power generation apparatus, thus avoiding safety accidents; moreover, the sealing form of the 9-shaped rubber strip addresses rainproof performance of inward-opening door well.

### BRIEF DESCRIPTION OF THE DRAWINGS

Fig. 1 is a schematic three-dimensional structural diagram of a mobile power generation apparatus on railway according to one or more embodiments of the present disclosure;
Fig. 2 is a schematic three-dimensional structural diagram of an oil tank in Fig. 1;
Fig. 3 is a schematic structural diagram of Fig. 2 with an outer side plate removed;
Fig. 4 is a schematic structural diagram of an outer side plate in Fig. 2;
Fig. 5 is a schematic structural diagram of an outer end plate in Fig. 2;
Fig. 6 is a schematic structural diagram of a side wall in Fig. 1;
Fig. 7 is a schematic top view of Fig. 6;
Fig. 8 is a schematic structural diagram of a side wall body in Fig. 6;
Fig. 9 is a schematic front view of a noise reduction plate in Fig. 8;
Fig. 10 is a schematic side view of Fig. 9;
Fig. 11 is a schematic top view of Fig. 9;
Fig. 12 is a schematic front view of an air intake louver in Fig. 6;
Fig. 13 is a schematic side view of Fig. 12;
Fig. 14 is a schematic top view of Fig. 12;
Fig. 15 is a schematic three-dimensional structural diagram of Fig. 12;
Fig. 16 is a schematic structural diagram of an air intake device in Fig. 6;
Fig. 17 is a schematic front view of an air intake window in Fig. 16;
Fig. 18 is a schematic side view of Fig. 17;
Fig. 19 is a schematic front view of an air intake hood in Fig. 16;
Fig. 20 is a schematic side view of Fig. 19;
Fig. 21 is a schematic diagram showing an installation structure of the oil filler window in Fig. 6;
Fig. 22 is a schematic three-dimensional structural diagram of the oil filler window in Fig. 21;
Fig. 23 is an schematic diagram showing an open state of Fig. 21;
Fig. 24 is a schematic diagram showing a closed state of Fig. 21;
Fig 25 is a schematic structural diagram of an oil filler window frame in Fig. 21; and
Fig. 26 is a schematic structural diagram of a lower crossbeam structure of the oil filler window frame in Fig. 21.

### List of Reference Numerals:

10 - air intake device; 11- air intake window; 11a - window frame; 11b - louver sheet; 11c - filter screen; 11d - rear baffle; 11e - front baffle; 11f - inclined plate; 11g - first air swirling region; 12 - air intake hood; 12a - hood shell; 12b - upper baffle; 12c - lower baffle; 12d - air ventilation hole; 12e - second air swirling region; 13 - air intake pipe; 20 - casing; 20a - underframe component; 20b - end wall component; 20c - side wall component; 20d - upper cover; 21 - bottom plate; 22 - oil tank; 22a - bottom oil tank; 22b - left oil tank; 22c - right oil tank; 22d - U-shaped cavity; 22e - top plate; 22f - left inspection through hole; 22g - right inspection through hole; 22h - outer side plate; 22i - outer end plate; 22j - lower outer side plate; 22k - upper outer side plate; 22l - lower U-shaped plate; 22m - upper right end plate; 22n - upper left end plate; 22o - inner U-shaped plate; 22p - upper left inner side plate; 22q - upper right inner side plate; 23 - oil drainage hole; 24 - oil filler port; 25 - left cover plate; 26 - right cover plate; 27 - frame; 27a - crossbeam of the frame; 28 - anti-wave plate; 30 - oil filler window; 3a - oil filler window frame; 3b - oil filler window body; 3c - hinge; 3d - door lock; 3e - water retaining strip; 3f - 9-shaped rubber strip; 3g - hollow cylindrical portion; 3h - flat portion; 3i - inner plate; 3j - outer plate; 3k - lower crossbeam; 31 - water leakage hole; 3m-U-shaped body; 3n - L-shaped stiffener plate; 3o - horizontal plate; 3p - vertical plate; 3q - extension plate; 3r - horizontal crossbeam stiffener plate; 3s - vertical beam stiffener plate; 40 - side wall body; 40a - upper side beam square steel; 40b - upper side beam; 40c - noise reduction plate; 40d - lower side beam; 40e - pillar; 40f - side wall plate; 40g - galvanized steel plate shell; 40h - rock wool; 40i - non-woven fabric; 40j - L-shaped interface; 40k - elastic piece; 41 - air intake louver frame; 42 - antenna box; 43 - oil filler window support frame; 44 - air intake window frame; 50 - air intake louver; 51 - upper frame; 51a - upper fixed plate; 51b - upper perforated plate; 52 - left frame; 52a - left frame body; 52b - left perforated plate; 53 - right frame; 53a - right frame body; 53b - right perforated plate; 54 - lower frame; 54a - lower fixed plate; 54b - bottom oblique connection plate; 55 - rear vertical plate; 56 - transition curved plate; 57 - diversion cavity; 58 - inner louver bar; 59 - outer louver bar; 60 - guard plate; 60a - vertical front guard plate body; 60b - side guard plate; 60c - guard plate flange; 61 - water baffle; 61a - welded plate; 61b - vertical water baffle body; 61c - water baffle flange; 62-louver bar notch; 63 - guard plate notch; 64 - first gap; 65 - second gap; 66 - second filtration zone; 70 - air exhaust device; 80 - diesel generator set; 90 - electric device; 100 - oil fuel device; 110 - fire-fighting system.

### EMBODIMENTS OF THE INVENTION

The present disclosure will be further described in detail below in conjunction with the drawings and specific embodiments.

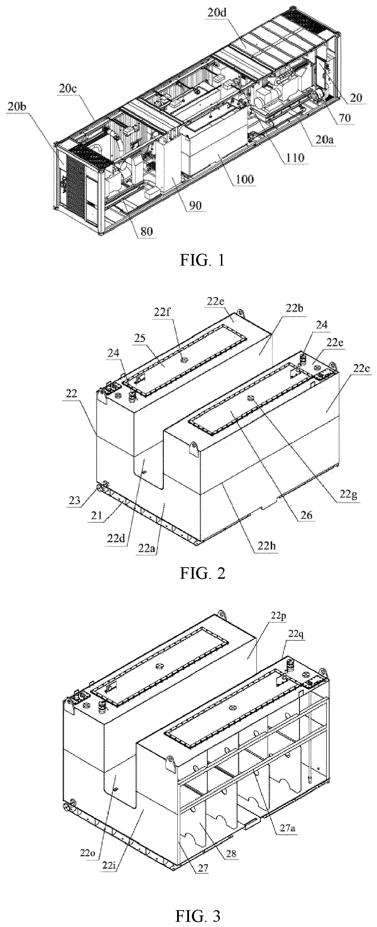

Fig. 1 shows a mobile power generation apparatus on railway, comprising a casing 20, two sets of diesel generator sets 80, an oil fuel device 100, a fire-fighting system 110, an electric device 90 and two air exhaust devices 70; wherein the two sets of diesel generator sets 80, the oil fuel device 100, the fire-fighting system 110, the electric device 90 and the two air exhaust devices 70 are all disposed in a cavity of the casing 20. The casing 20 comprises an underframe component 20a, two end wall components 20b, two side wall components 20c and an upper cover 20d.

As shown in Fig. 2, an oil tank 22 fixed on a bottom plate 21 of the underframe component 20a by bolts has a U-shaped cross section. The oil tank 22 comprises a bottom oil tank 22a, a left oil tank 22b disposed on a left side of a top surface of the bottom oil tank 22a and communicated with the bottom oil tank 22a, and a right oil tank 22c disposed on a right side of the top surface of the bottom oil tank 22a and communicated with the bottom oil tank 22a (the left side and right side are only for the convenience of description and do not represent the actual orientation, and the left side and right side are named according to the directions in the figures). An outer vertical surface of the left oil tank 22b is flush with a left outer vertical surface of the bottom oil tank 22a, and an outer vertical surface of the right oil tank 22c is flush with a right outer vertical surface of the bottom oil tank 22a; an inner vertical surface of the left oil tank 22b, an inner vertical surface of the right oil tank 22c and the top surface of the bottom oil tank 22a enclose a U-shaped cavity 22d, i.e., the left oil tank 22b is communicated with the right oil tank 22c through the bottom oil tank 22a, and an internal space of the oil tank 22 is a U-shaped space, and a bottom surface of the U-shaped cavity 22d serves as a passage for the operator to walk. An oil drainage hole 23 is formed at a position below the bottom oil tank 22a and close to the bottom surface of the bottom oil tank 22a. Correspondingly, top plates 22e of the left oil tank 22b and the right oil tank 22c are both provided with oil filler ports 24. A distance from a top plates 22e of the oil tank 22 to an inner top of the casing 20 is 1/3 to 1/2 of a height of the oil tank 22, which reduces an overall height of the oil tank 22. However, the volume of the oil tank with a U-shaped cross section is not reduced but is increased, so that the space for the mobile power generation apparatus can be fully utilized.

The following further elaborates on specific parameters:
Installation environment of the oil tank: an external dimensions of the casing 20 of the mobile power generation apparatus: length × width × height = 12192 mm × 2438 mm × 2591 mm. The diesel generator sets 80, the oil tanks 22, and power distribution cabinets are installed in the casing 20 of the mobile power generation apparatus.

Traditional structure: two rectangular oil tanks are used, with an external dimensions of length × width × height = 3360 mm × 842 mm × 1823mm; wherein, dimensions of U-shaped portion: length × width × height = 3360 mm × 608 mm × 1113 mm, volume: 5157 mm³. A distance from a top of the oil tank to an inner top of the casing of a power generation apparatus is 768 mm.

Structure of the mobile power generation apparatus on railway according to one or more embodiments of present disclosure: one U-shaped oil tank is adopted, with an external dimensions of length × width × height = 2952 mm × 2208 mm × 1787 mm, volume: 9650 mm³. A distance from a top of the oil tank to an inner top of the casing 20 of the mobile power generation apparatus on railway is 804 mm.

In addition, in order to facilitate the operation in the oil tank 22, a left inspection through hole 22f is formed in the top plate 22e of the left oil tank 22b, and a left cover plate 25 covering the left inspection through hole 22f is disposed on the top plate 22e of the left oil tank 22b. Similarly, a right inspection through hole 22g is formed in the top plate 22e of the right oil tank 22c, and a right cover plate 26 covering the right inspection through hole 22g is disposed on the top plate 22e of the right oil tank 22c.

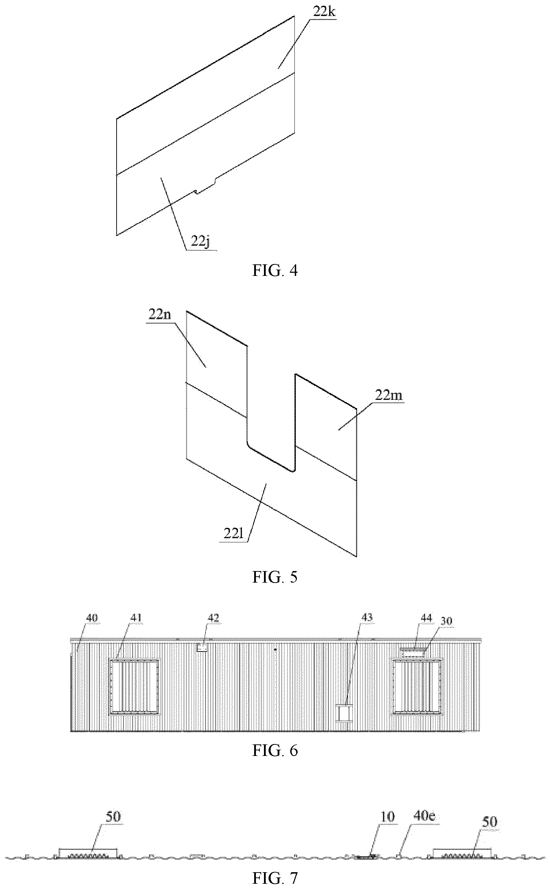

In order to further increase the strength and rigidity of the oil tank 22, as shown in Fig. 3, a U-shaped space inside the oil tank 22 is lined with a frame 27 around. Outer side plates 22h and outer end plates 22i around the oil tank 22 are all fixed on the frame 27. Each outer side plate 22h is formed by connecting an upper outer side plate 22k and a lower outer side plate 22j, as shown in Fig. 4. The outer end plate 22i is formed by connecting a lower U-shaped plate 22l, an upper left end plate 22n and an upper right end plate 22m, as shown in Fig. 5. An inner wall of the U-shaped cavity 22d of the oil tank 22 is formed by connecting an inner U-shaped plate 22o, an upper left inner side plate 22p, and an upper right inner side plate 22q, as shown in Fig. 3. Thus, it is convenient to install the oil tank.

In order to prevent the liquid from forming waves during transportation, a plurality of anti-wave plates 28 are disposed in the U-shaped space of the oil tank 22. The anti-wave plates 28 in a lower layer are fixed on a bottom surface of the bottom oil tank 22a, and the anti-wave plate 28 in an upper layer is fitted on a crossbeam 27a of the frame 27.

Compared with the traditional railway power generation apparatus, the mobile power generation apparatus on railway according to one and more embodiments of the present disclosure reduces the number of oil tanks and correspondingly reduces the communication pipelines among the oil tanks, thus making the oil tank compact, and reducing the footprint of the oil tank, so that the space inside the casing 20 can be fully utilized. The skeleton framework of the oil tanks adopts a frame structure, which increases the strength and rigidity, and has good impact resistance. the frame is set in the U-shaped space of the oil tank; the outer side plate, the outer end plate and the inner wall of the U-shaped cavity of the oil tank are all composed of upper and lower parts, and the upper and lower parts of the outer side plate and the outer end plate are respectively welded to the middle crossbeam of the frame and then simultaneously butt-welded, which has good manufacturability. In addition, the overall height of the oil tank is reduced, thereby lowering the center of gravity of the oil tank and providing better stability.

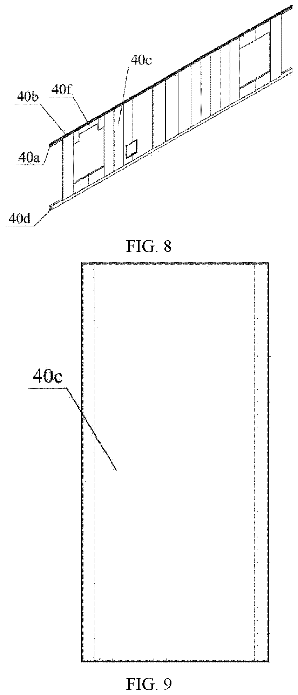

As shown in Figs. 6 and 7, the side wall component 20c comprises a side wall body 40, an air intake louver 50 installed in an air intake louver frame 41 of the side wall body 40, an antenna box 42 installed on the side wall body 40, an oil filler window 30 disposed in an oil filler window support frame 43 of the side wall body 40, and an air intake device 10 installed on an air intake window frame 44 of the side wall body 40. As shown in Fig. 8, the side wall body 40 comprises an upper side beam square steel 40a, an upper side beam 40b welded to a top surface of the upper side beam square steel 40a, a lower side beam 40d, a side wall plate 40f, a noise reduction plate 40c attached to the side wall plate 40f, and a plurality of pillars 40e. An upper end of the side wall plate 40f is welded to the upper side beam square steel 40a, and a lower end of the side wall 40f is welded to the lower side beam 40d. a plurality of pillars 40e connect the upper side beam 40b, the upper side beam square steel 40a and the lower side beam 40d together to form an entirety. In one or more embodiments of the present disclosure, the upper side beam 40b is a C- profiled part, and a top surface of the upper side beam 40b is provided with bolt holes to facilitate the connection of a top cover of the casing 20 of the mobile power generation apparatus. A bottom surface of the upper side beam 40b is connected with the upper side beam square steel 40a. The upper side beam square steel 40a is connected to corner fittings of the end wall components of the casing 20 of the mobile power generation apparatus, which greatly improves the strength of the side wall.

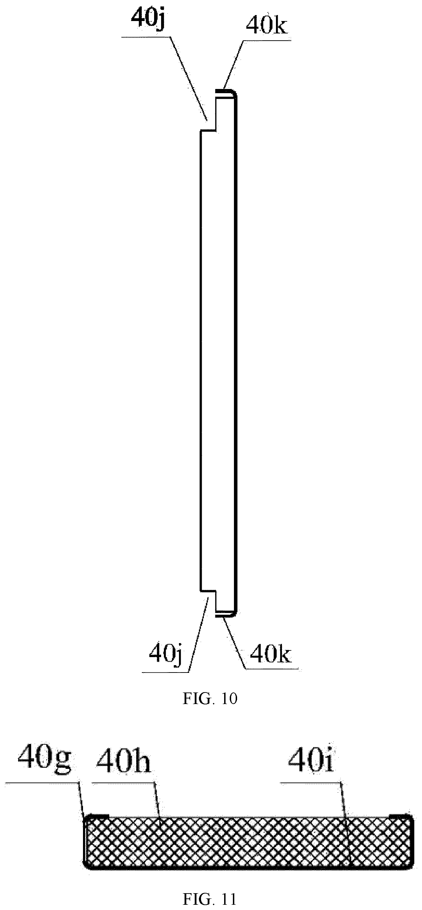

As shown in Fig. 9 and Fig. 11, the noise reduction plate 40c comprises a galvanized steel plate shell 40g, non-woven fabric 40i laid on an inner bottom surface of the galvanized steel plate shell 40g, and rock wool 40h filled inside the galvanized steel plate shell 40g. In addition, a L-shaped interface 40j is formed at each of top and bottom ends of the noise reduction plate 40c. The L-shaped interface 40j at the top of the noise reduction plate 40c is matched with the upper side beam square steel 40a, and a top surface of the L-shaped interface 40j abuts on a lower surface of the upper side beam 40b. Similarly, the L-shaped interface 40j at the bottom end of the noise reduction plate 40c is matched with the lower side beam 40d, and a bottom end surface of the L-shaped interface 40j rests on an iron floor. When the noise reduction plate 40c is covered on the side wall 40f, an outer surface of the noise reduction plate 40c is flush with an outer vertical surfaces of the upper side beam 40b and the lower side beam 40d. End faces of the L-shaped interfaces 40j at both ends of the noise reduction plate 40c are provided with elastic piece 40k, which facilitates covering the noise reduction plate 40c on the side wall plate 40f, as shown in Fig. 10.

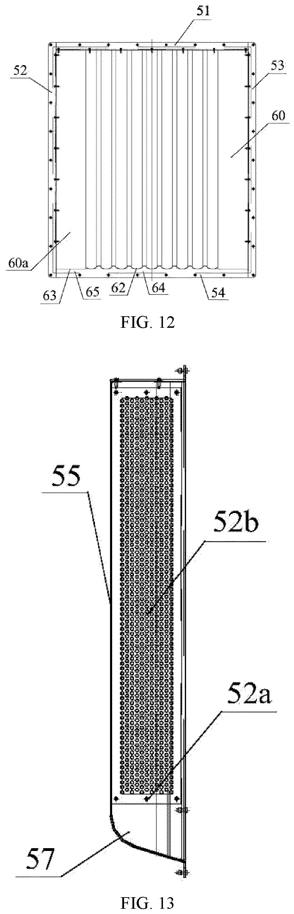

As shown in Figs. 12, 13, and 14, the air intake louver 50 comprises a louver frame enclosed by an upper frame 51, a left frame 52, a right frame 53, a lower frame 54, a rear vertical plate 55, and a louver bar assembly installed in the louver frame. Sealing strips are arranged on all of the upper frame 51, the left frame 52, the right frame 53, the lower frame 54 and the rear vertical plate 55. All outer vertical surfaces of the air intake louvers do not exceed outer vertical surfaces of the upper side beam 40b of the side wall body 40 and the air intake louver frame 41. An outer vertical surface of the louver bar assembly does not exceed an outer vertical surface of the louver frame, thereby avoiding bolts or the like for installation extend beyond the outer vertical surfaces. Before installation, sealant is applied on each sealing strip, and then the louver frame is connected with the air intake louver frame 41 on the side wall body 40 of the mobile power generation apparatus on railway through bolts and nuts. The sealing strips prevent rain from entering.

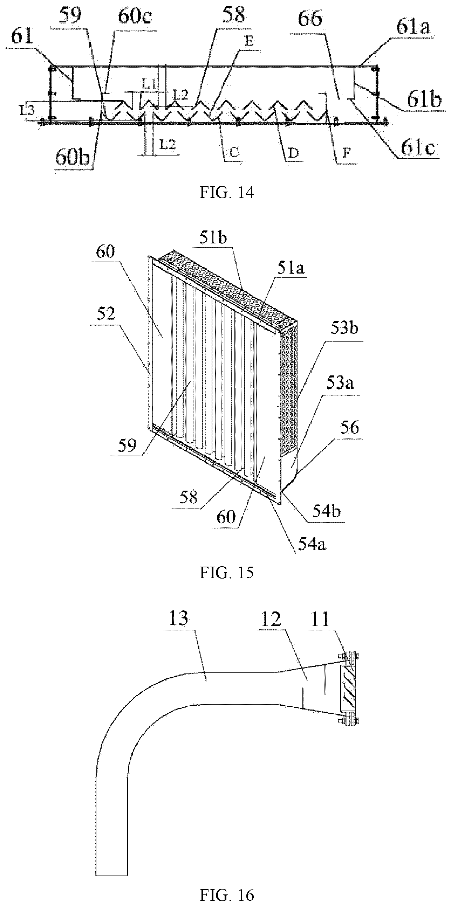

As shown in Fig. 15, the upper frame 51 comprises an upper perforated plate 51b and an upper fixed plate 51a. The left frame 52 comprises a left frame body 52a and a left perforated plate 52b installed on the left frame body 52a. The right frame 53 comprises a right frame body 53a and a right perforated plate 53b installed on the right frame body 53a. The lower frame 54 comprises a lower fixed plate 54a and a bottom oblique connection plate 54b connected to the lower fixed plate 54a. the rear vertical plate 55, the left frame 52, the right frame 53, the upper fixed plate 51a and the lower frame 54 are bolted or welded to form a frame body. The bottom oblique connection plate 54b of the lower frame 54 is connected to a bottom side of the rear vertical plate 55 through a transition curved plate 56. This kind of rectangular louver frame overcomes the defect that traditional louver occupies too much space for the box due to its larger opening at the back, thus facilitating the operation inside the power generation apparatus by operators. There is an upper gap for installing the upper perforated plate 51b between the upper fixed plate 51a and the rear vertical plate 55. Aperture ratios of the upper perforated plate 51b of the upper frame 51, the left perforated plate 52b of the left frame 52 and the right perforated plate 53b of the right frame 53 are not less than 65% , and a diameter of the perforated hole is not more than 5 mm. In this way, it increases an air intake area and overcomes the defect that the air intake area is reduced because the louver frame is of rectangular shape on the one hand, and it can filter rainwater and prevent foreign matters from entering the louver on the other hand.

The bottom oblique connection plate 54b of the lower frame 54 is connected to a bottom edge of the rear vertical plate 55 through a transition curved plate 56. Correspondingly, both bottoms of the left frame 52 and the right frame 53 have arc-shaped surfaces, and the curvature of the arc-shaped surfaces are the same as the transition curved plate 56, so that a diversion cavity 57 is formed by the rear vertical plate 55, the lower frame 54 and the louver bar assembly, which is convenient for air to enter from above the diversion cavity 57; the lower part of the diversion cavity 57 and the transition curved plate 56 are convenient for draining rainwater downward.

As shown in Fig. 14, the louver bar assembly comprises a row of inner louver bars 58 welded on an inner side of the louver frame and a row of outer louver bars 59 welded on an outer side of the louver frame. The inner louver bars 58 and the outer louver bars 59 are evenly arranged alternately back and forth. Top ends of the inner louver bars 58 and the outer louver bars 59 are both fixed on the upper fixed plate 51a of the upper frame 51, and bottom ends of the inner louver bars 58 and the outer louver bars 59 are both fixed on the lower fixed plate 54a of the lower frame 54 , so that the outer louver bars 59 and the inner louver bars 58 are arranged in a vertical direction. After rainwater is filtered by the louver bar assembly for the first time, it is deposited on the inner wall of the rear vertical plate 55 through a centrifugal force generated by a whirling air intake mode in the diversion cavity 57, and then discharged downward by the transition curved plate 56.

As shown in Fig. 14, there are side gaps for installing a guard plates 60 between a left end of the louver bar assembly and the left frame 52, and between a right end of the louver bar assembly and the right frame 53. The guard plate 60 comprises a vertical front guard plate body 60a, a side guard plate 60b connected to the vertical front guard plate body 60a, and a guard plate flange 60c folded along an edge of the side guard plate 60b. The vertical front guard plate body 60a on the left is connected to a front edge of the left frame 52, and the side guard plate 60b on the left is connected to a left end of the louver bar assembly; the vertical front guard plate body 60a on the right is connected to a front edge of the right frame 53, and the side guard plate 60b on the right is connected to a right end of the louver bar assembly. The guard plate flanges 60c of the two side guard plates 60b are arranged oppositely. Correspondingly, a water baffle 61 is arranged on each of left and right sides inside the louver frame, that is, one water baffle 61 is located between the left frame 52 and the guard plate 60 on the left, and another water baffle 61 is located between the right frame 53 and the guard plate 60 on the right. The water baffle 61 comprises a welded plate 61a welded to an inner wall of the rear vertical plate 55, a vertical water baffle body 61b connected to the welded plate 61a, and a water baffle flange 61c folded along an edge of the vertical water baffle body 61b. The water baffle flanges 61c of the two water baffles 61 are arranged oppositely. The water baffle flange 61c of the water baffle 61 is flush with the guard plate flange 60c of the guard plate 60, or the vertical water baffle body 61b of the water baffle 61 and the side guard plate 60b of the guard plate 60 partially overlap to form a second filtration zone 66.

After the air mixed with rainwater is filtered for the first time through the inner louver bars 58 and the outer louver bars 59, most of the air mixed with rainwater has settled down through the rear vertical plate due to the centrifugal force whirling around the louver bar assembly. A small amount of the air mixed with rainwater has already fallen to the bottom due to gravity after passing through a longer second filtration zone 66. At this time, due to the negative pressure of the diesel generator sets in the mobile power generation apparatus on railway, rainwater may be drawn in at a bottom of the louver. In one and more embodiments, a water baffle 61 is provided inside the louver frame, so that the rainwater sucked in will impact on the water baffle 61, and the rainwater will be deposited on the baffle 61 and flow down. Air will bend through the second filtration zone 66 to form a whirling air again and finally, and will be filtered by the left perforated plate 52b or the right perforated plate 53b and enters the mobile power generation apparatus on railway. In addition, under unmanned operations nationwide, the left perforated plate 52b or the right perforated 53b can prevent dust and small animals from entering the mobile power generation apparatus on railway.

In one and more embodiments, a front-to-rear distance L3 between the inner louver bars 58 and the outer louver bars 59 is 75-85 mm (preferably 80 mm); a distance L1 between adjacent inner louver bars 58 is 90-100 mm, and a distance L2 between adjacent outer louver bars 59 is 90-100 mm, so that the total area of louver air inlets is greater than 1.8 times of the diesel engine air intake.

In addition, as shown in Fig. 12, a louver bar notch 62 is formed at a bottom of each of the outer louver bars 59, and there is a first gap 64 between the louver bar notch 62 and the lower fixed plates 54a of the lower frame 54; a guard plate notch 63 is formed at a bottom of each of the two guard plates 60, and there is a second gap 65 between the guard plate notch 63 and the lower fixed plate 54a of the lower frame 54, so that the water can be prevented from accumulating at the bottom of the outer louver bars 59 and the guard plates 60.

The operation principle of the air intake louvers 50 in one and more embodiments is as follows:
The inner louver bars 58 are installed on the inner side, and the outer louver bars 59 are installed on the outer side. when wind and rain come, they will first hit a C side of the outer louver bars 59 and a D side of the inner louver bars 58 for the first filtering (see Fig. 14). At this time, most of rainwater will flow down along the louver bar assembly due to gravity, and air can rise with wind. At the same time, the external air is sucked into the casing 20 through lateral gaps between the inner louver bars 58 and the outer louver bars 59 due to a negative pressure generated by an engine intake pressure when the diesel generator sets inside the casing 20 work, i.e., rainwater is deposited on the rear vertical plate 55 by the centrifugal force formed by the whirling air intake mode. If a small amount of rainwater passes through the inner louver bars 58 and the outer louver bars 59, it will eventually fall back due to gravity as it rises along the rear vertical plate 55. When a small amount of rainwater accumulates on an E side of the outer louver bars 59, since the louver bar notches 62 are formed at the bottom of the outer louver bars 59 and there are the first gaps 64 between the louver bar notches 62 and the lower fixed plate 54a, the rainwater can be drained out from the louver bar notches 62. If a very small amount of rainwater passes through the first filtration zone, at this time, because the remaining rainwater is less, its weight is further reduced, and the remaining rainwater will be sucked in by the negative pressure in the casing 20 when it settles down to a lower portion of the casing 20. However, at this time, due to the installation of the water baffle 61 and an F side of the guard plate 62, the second filtration zone 66 is formed. The air mixed with rainwater will once again form a whirling air intake, and the rainwater will flow down along the water baffle 61 and finally is drained out through the second gap 65 between the guard plate 60 and the lower frame 54. The last guard is the perforated plates on the upper and side portions. Due to the small diameter of the holes of the perforated plates, they can block dust particles and small animals.

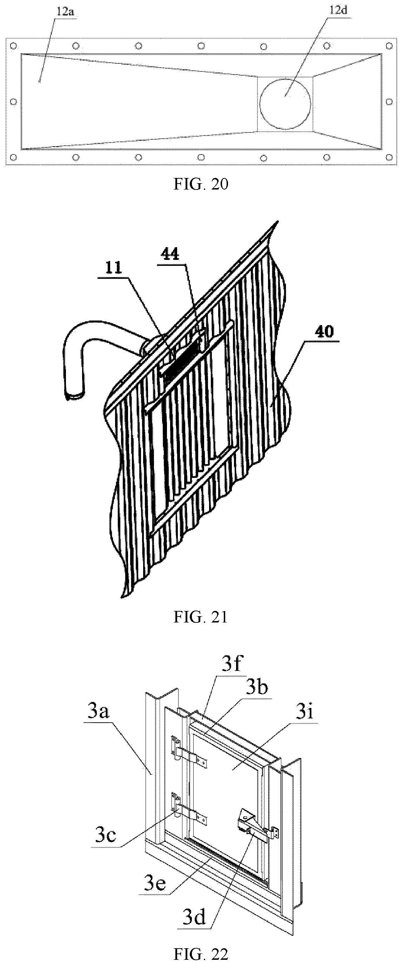

As shown in Figs. 16, the air intake device 10 comprises an air intake window 11, an air intake pipe 13, an air intake hood 12 communicating the air intake window 11 and the air intake pipe 13, and a filter screen located behind a louver sheet and fixed on the back of a window frame. The air intake window 11 of the air intake device 10 is embedded in the air intake window frame 44 of the side wall body 40, and an outer vertical surface of the window frame 11a of the air intake window 11 does not exceed an outer vertical surface of the air intake window frame 44 so as to avoid that the air intake window 11 is installed beyond an outer vertical surface of corner fittings on an outer side of the side wall body 40, as shown in Fig. 21.

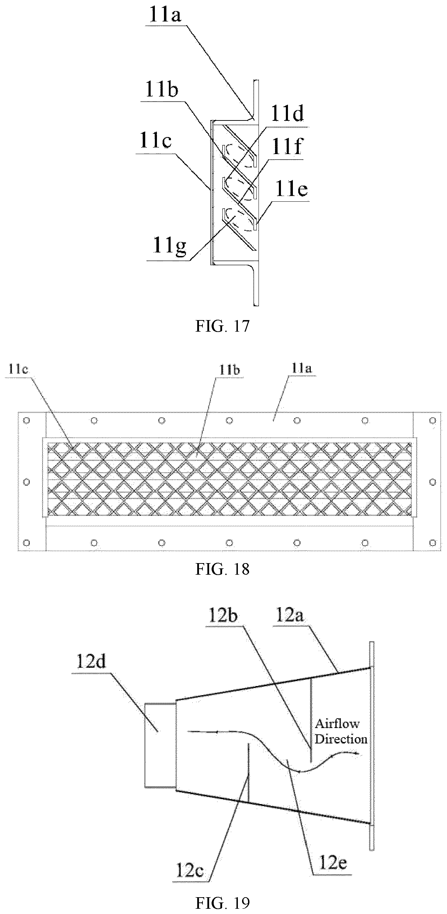

As shown in Fig. 17 and Fig. 18, the air intake window 11 comprises the window frame 11a, a plurality of louver sheets 11b installed in the window frame 11a and a filter screen 11c. The plurality of louver sheets 11b are arranged and stacked along a width direction of the window frame 11a (i.e., a height direction of the window frame 11a after the air intake window 11 is installed on the side wall body 40 of the mobile power generation apparatus on railway). The filter screen 11c is located behind the louver sheets 11b (i.e., close to the air intake hood 12) and fixed on the back of the window frame 11a. In one or more embodiments, each louver sheet 11b comprises an inclined plate 11f, a rear baffle 11d disposed on a rear edge of the inclined plate 11f (i.e., a direction close to the air intake hood 12), and a front baffle 11e disposed on a front edge of the inclined plate 11f. The rear baffle 11d and the front baffle 11e are arranged in parallel and in an opposite directions, i.e., the rear baffle 11d and the front baffle 11e are not arranged on the same side of the inclined plate 11f. Two ends of each louver sheet 11b are fixed on the window frame 11a, and a front baffle 11e of one louver sheet 11b in every two adjacent louver sheets and a rear baffle 11d of another louver sheet 11b completely overlap or partially overlap to form a first air swirling region 11g.

Referring to Figs. 19 and 20, the air intake hood 12 comprises a hood shell 12a and a baffle assembly disposed in the hood shell 12a. A front end surface of the hood shell 12a is fixedly connected to a back surface of the window frame 11a, and an air ventilation hole 12d at a rear end of the hood shell 12a is fixedly connected to the air intake pipe 13. The baffle assembly comprises one upper baffle 12b and one lower baffle 12c (according to the height direction of the window frame 11a). Preferably, the upper baffle 12b and the lower baffle 12c are both parallel with the window frame 11a of the air intake window 11. There is a gap between the upper baffle 12b and the lower baffle 12c, and the upper baffle 12b and the lower baffle 12c partially overlap to form a secondary air swirling region 12e.

When the diesel generator set start to work, air enters the diesel generator set through the air intake window 11, the air intake hood 12, and the air intake pipe 13 in sequence. When air passes through the air intake window 11, the first air swirling region 11g is formed between every two adjacent louver sheets 11b so as to separate water and dust contained in the air. The water and dust flow out of the window along the louver sheets 11b to complete a fist filtration. At the same time, the filter screen 11c on the back surface of the window frame 11a can effectively block catkins. When the air passes through the air intake hood 12, because there is a gap between the upper baffle 12b and the lower baffle 12c in the hood shell 12a, and the upper baffle 12b and the lower baffle 12c partially overlap, a second air swirling region 12e can also be formed on the basis of reaching effective intake area, so that the intake air presents an "S" swirling flow, which further effectively removes the water and dust contained in the air during the intake process to complete the second filtration. After the second filtration, the content of water and dust in the intake air is greatly reduced, and a purpose of rainproof and dustproof is realized.

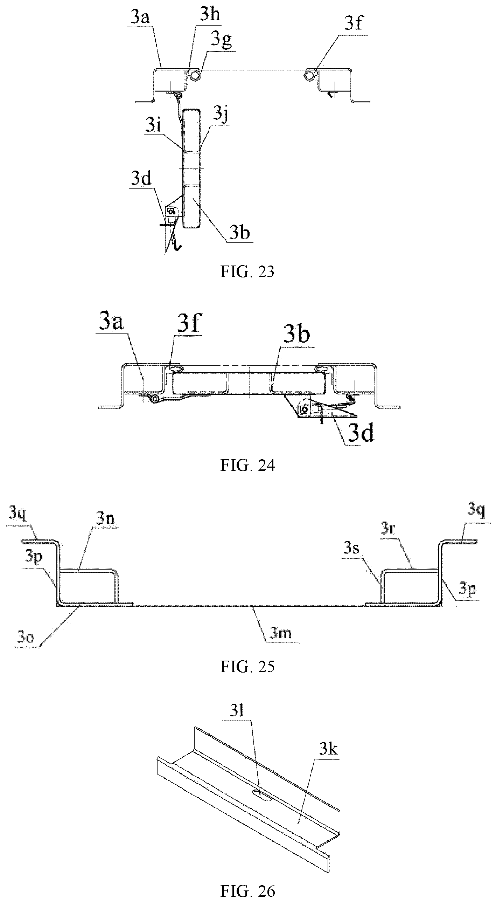

As shown in Fig. 22 and Fig. 23, the oil filler window 30 is an inward-opening oil filler window. The inward-opening oil filler window comprises an oil filler window frame 3a embedded in the oil filler window support frame 44 of the side wall body 40, an oil filler window body 3b embedded inside a portal of the oil filler window frame 3a through a hinge 3c, and a door lock 3d disposed on the oil filler window body 3b. A fixed end of the hinge 3c is fastened on one side of an inner surface of the oil filler window frame 3a, and a connection end of the hinge 3c is fastened on one side of the inner surface of the oil filler window body 3b. Correspondingly, a door lock body of the door lock 3d is fastened on another side of the inner surface of the oil filler window body 3b, and a fixing seat of the door lock 3d is fastened on another side of the inner surface of the oil filler window frame 3a, so that the oil filler window 30 can be opened inward, i.e., the oil filler window 30 can only be opened toward the inside of the mobile power generation apparatus on railway. In one or more embodiments, the term "inside" or "outside" refers to a direction in which the side wall body 40 is installed on the mobile power generation apparatus on railway; the term "inside" refers to the inside of the mobile power generation apparatus on railway, and the term "outside" refers to the outside of the mobile power generation apparatus on railway.

In one or more embodiments, the interior of the oil filler window body 3b is filled with noise-reducing rock wool, and an inner plate 3i on the inner surface of the oil filler window body 3b adopts a noise-reducing perforated plate. The noise-reducing perforated plate can effectively absorb noise. The remaining five side surfaces of the oil filler window body 3b are formed by welding two adjacent abutting sides of one outer plate 3j which is bent, thereby reducing welding points, and having the advantages of reduced solder joints and no welding deformation. The structure of the outer plate 3j is a deployed structure of the remaining five side surfaces of the oil filler window body 3b after removing the inner surface of the oil filler window body 3b. In order to ensure that the oil filler window does not exceed the limit of the corner fittings when the oil filler window is installed, the outer surface of the oil filler window frame 3a which is embedded in the portal of the inwardly-opening window frame of the side wall is flush with the outer surface of the side wall body 40. In addition, a plurality of water leakage holes 3l are formed on a lower crossbeam 3k at a bottom of the oil filler window frame 3a, as shown in Fig. 26. A water retaining strip 3e is installed on a bottom surface of the portal of the oil filler window frame 3a and located on an inner side of the oil filler window frame 3a, and a length of the water retaining strip 3e is equal to a width of the portal of the oil filler window frame 3a. If a small amount of rainwater enters the oil filler window, it can be effectively drained off.

In addition, as shown in Fig. 25, the oil filler window frame 3a comprises a special-shaped member and a stiffener assembly. The special-shaped member comprises a U-shaped body 3m, a portal formed on a horizontal plate 3o of the U-shaped body 3m for installing the oil filler window body 3b, and extension plates 3q extending horizontally outward along a top edge of two vertical plates 3p of the U-shaped body 3m. The stiffener assembly comprises two L-shaped stiffener plates 3n. One L-shaped stiffener plate 3n is fixed on one side of the U-shaped body 3m, and another L-shaped stiffener plate 3n is fixed on another side of the U-shaped body 3m. An end of a horizontal crossbeam stiffener plate 3r of the L-shaped stiffener plate 3n is fixed on an inner side of a vertical plate 3p of the U-shaped body 3m, and an end of a vertical beam stiffener plate 3s of the L-shaped stiffener plate 3n is fixed on the horizontal plate 3o of the U-shaped body 3m. An outer vertical surface of the oil filler window frame 3a does not exceed an upper side beam of the side wall body 40, so as to avoid that the oil filler window frame 3a exceeds the corner fittings outside the side wall body 40.

As shown in Figs. 23 and 24, in one or more embodiments, a 9-shaped rubber strip 3f is used to replace traditional rubber strip to be installed between the oil filler window frame 3a and the oil filler window body 3b, i.e., a circle of 9-shaped rubber strips 3f which is installed around the portal of the oil filler window frame 3a can effectively ensure quality of installation and positioning of the oil filler window body 3b. The oil filler window body 3b is an inward-opening window body (i.e., a hollow cylindrical portion 3g of the 9-shaped rubber strip 3f is disposed on an outer side of the portal of the oil filler window frame 3a), and a flat portion 3h of the 9-shaped rubber strip 3f is disposed on an inner side of the portal of the oil filler window frame 3a and is attached to an inner wall of the opening of the oil filler window frame 3a. In this way, when the oil filler window body 3b and the oil filler window frame 3a squeeze the 9-shaped rubber strip 3f, the 9-shaped rubber strip 3f can effectively adhere to the oil filler window body 3b and the oil filler window frame 3a after being deformed (as shown in Fig. 24), so as to achieve a sealing effect.

In one or more embodiments, both the hinge and the door lock adopt standard parts for versatility; and a hinge pad is lined between the connection end of the hinge and the inner surface of the oil filler window body. Similarly, a door lock pad is lined between the fixing seat of the door lock and the inner surface of the oil filler window frame.

The oil filler window 30 with inward-opening avoids exceeding the railway boundary limit. When the oil filler window 30 is not closed or loose, it will move inside the mobile power generation apparatus on railway with no accidents. Adopting the sealing form of the 9-shaped rubber strip can solve the problem of rainproof performance of an inward opening door.

In one or more embodiments, the antenna box 42 is a closed type antenna box, and sealant is applied on the outer circumference of the antenna box 42 to prevent rainwater from entering the antenna box 42.

## Claims

1. A mobile power generation apparatus on railway, comprising a casing (20), two sets of diesel generator sets (80), an oil fuel device (100), a fire-fighting system (110), an electric device (90) and two air exhaust devices (70);
wherein the two sets of diesel generator sets (80), the oil fuel device (100), the fire-fighting system (110), the electric device (90) and the two air exhaust devices (70) are all disposed in a cavity of the casing (20);
the casing (20) comprises an underframe component (20a), two end wall components (20b), two side wall components (20c) and an upper cover (20d);
**characterised in that** an oil tank (22) fixed on a bottom plate (21) of the underframe component (20a) by bolts has a U-shaped cross section, and the oil tank (22) comprises a bottom oil tank (22a), a left oil tank (22b) disposed on a left side of a top surface of the bottom oil tank (22a) and communicated with the bottom oil tank (22a), and a right oil tank (22c) disposed on a right side of the top surface of the bottom oil tank (22a) and communicated with the bottom oil tank (22a);
a U-shaped cavity (22d) is enclosed by an inner vertical surface of the left oil tank (22b), an inner vertical surface of the right oil tank (22c) and the top surface of the bottom oil tank (22a); and
a distance from a top plate (22e) of the oil tank (22) to an inner top of the casing (20) is 1/3 to 1/2 of a height of the oil tank (22).

2. The mobile power generation apparatus on railway according to claim 1, wherein a U-shaped space inside the oil tank (22) is lined with a frame (27) around;
outer side plates (22h) and outer end plates (22i) around the oil tank (22) are all fixed on the frame (27);
each outer side plate (22h) is formed by connecting an upper outer side plate (22k) and a lower outer side plate (22j), and each outer end plate (22i) is formed by connecting a lower U-shaped plate (22l), an upper left end plate (22n) and an upper right end plate (22m);
an inner wall of the U-shaped cavity (22d) of the oil tank (22) is formed by connecting an inner U-shaped plate (22o), an upper left inner side plate (22p) and an upper right inner side plate (22q);
a plurality of anti-wave plates (28) are disposed in the U-shaped space of the oil tank (22); and
the anti-wave plates (28) in a lower layer are fixed on a bottom surface of the bottom oil tank (22a), and the anti-wave plates (28) in an upper layer is fitted on a crossbeam (27a) of the frame (27).

3. The mobile power generation apparatus on railway according to claim 1, wherein the side wall component (20c) comprises a side wall body (40), an air intake louver (50) installed in an air intake louver frame (41) of the side wall body (40), an antenna box (42) installed on the side wall body (40), an oil filler window (30) disposed on an oil filler window support frame (43) of the side wall body (40), and an air intake device (10) installed on an air intake window frame (44) of the side wall body (40);
the side wall body (40) comprises an upper side beam square steel (40a), an upper side beam (40b) welded to a top surface of the upper side beam square steel (40a), a lower side beam (40d), a side wall plate (40f) and a noise reduction plate (40c) attached to the side wall plate (40f);
an upper end of the side wall plate (40f) is welded to the upper side beam square steel (40a), and a lower end of the side wall plate (40f) is welded to the lower side beam (40d); and
the noise reduction plate (40c) comprises a galvanized steel plate shell (40g), non-woven fabric (40i) laid on an inner bottom surface of the galvanized steel plate shell (40g), and rock wool (40h) filled inside the galvanized steel plate shell (40g);
a L-shaped interface (40j) is formed at each of top and bottom ends of the noise reduction plate (40c);
the L-shaped interface (40j) at the top end of the noise reduction plate (40c) is matched with the upper side beam square steel (40a), and a top end surface of the L-shaped interface (40j) abuts on a lower surface of the upper side beam (40b);
the L-shaped interface (40j) at the bottom end of the noise reduction plate (40c) is matched with the lower side beam (40d), and a bottom end surface of the L-shaped interface (40j) abuts on an iron floor; and
end surfaces of the L-shaped interfaces (40j) at the top and bottom ends of the noise reduction plate (40c) are provided with elastic pieces (40k).

4. The mobile power generation apparatus on railway according to claim 3, wherein the air intake louver (50) comprises a louver frame enclosed by an upper frame (51), a left frame (52), a right frame (53), a lower frame (54), a rear vertical plate (55), and a louver bar assembly installed inside the louver frame;
the upper frame (51) comprises an upper perforated plate (51b) and an upper fixed plate (51a);
the left frame (52) comprises a left frame body (52a) and a left perforated plate (52b) installed on the left frame body (52a), and the right frame (53) comprises a right frame body (53a) and a right perforated plate (53b) installed on the right frame body (53a);
the lower frame (54) comprises a lower fixed plate (54a) and a bottom oblique connection plate (54b) connected to the lower fixed plate (54a), and a diversion cavity (57) is confined by the rear vertical plate (55), the lower frame (54) and the louver bar assembly; and
the louver bar assembly comprises a row of inner louver bars (58) welded on an inner side of the louver frame and a row of outer louver bars (59) welded on an outer side of the louver frame, and the inner louver bars (58) and the outer louver bars (59) are arranged evenly and alternately back and forth.

5. The mobile power generation apparatus on railway according to claim 4, wherein the rear vertical plate (55), the left frame (52), the right frame (53), the upper fixed plate (51a) and the lower frame (54) are bolted or welded to form a frame body, and the bottom oblique connection plate (54b) of the lower frame (54) is connected to a bottom side of the rear vertical plate (55) through a transition curved plate (56);
there are side gaps for installing a guard plates (60) between a left end of the louver bar assembly and the left frame (52), and between a right end of the louver bar assembly and the right frame (53);
the guard plate (60) comprises a vertical front guard plate body (60a), a side guard plate (60b) connected to the vertical front guard plate body (60a), and a guard plate flange (60c) folded along an edge of the side guard plate (60b);
the vertical front guard plate body (60a) on the left is connected to a front edge of the left frame (52), and the side guard plate (60b) on the left is connected to a left end of the louver bar assembly;
the vertical front guard plate body (60a) on the right is connected to a front edge of the right frame (53), and the side guard plate (60b) on the right is connected to a right end of the louver bar assembly;
the guard plate flanges (60c) of the two side guard plates (60b) are arranged oppositely, and a water baffle (61) is arranged on each of left and right sides inside the louver frame;
the water baffle (61) comprises a welded plate (61a) welded to an inner wall of the rear vertical plate (55), a vertical water baffle body (61b) connected to the welded plate (61a), and a water baffle flange (61c) folded along an edge of the vertical water baffle body (61b);
the water baffle flanges (61c) of the two water baffles (61) are arranged oppositely; and
the water baffle flange (61c) of the water baffle (61) is flush with the guard plate flange (60c) of the guard plate (60), or the vertical water baffle body (61b) of the water baffle (61) and the side guard plate (60b) of the guard plate (60) partially overlap to form a second filtration zone (66).

6. The mobile power generation apparatus on railway according to claim 5, wherein a louver bar notch (62) is formed at a bottom of each of the outer louver bars (59), and there is a first gap (64) between the louver bar notch (62) and the lower fixed plates (54a) of the lower frame (54); and
a guard plate notch (63) is formed at a bottom of each of the two guard plates (60), and there is a second gap (65) between the guard plate notch (63) and the lower fixed plate (54a) of the lower frame (54).

7. The mobile power generation apparatus on railway according to claim 3, wherein the air intake device (10) comprises an air intake window (11), an air intake pipe (13), an air intake hood (12) communicating the air intake window (11) and the air intake pipe (13), and a filter screen (11c) located behind a louver sheet (11b) and fixed on the back of a window frame (11a);
the air intake window (11) comprises the window frame (11a) and a plurality of louver sheets (11b) installed in the window frame (11a), and the plurality of louver sheets (11b) are arranged and stacked along a width direction of the window frame (11a);
each louver sheet (11b) comprises an inclined plate (11f), a rear baffle (11d) disposed on a rear edge of the inclined plate (11f), and a front baffle (11e) disposed on a front edge of the inclined plate (11f);
the rear baffle (11d) and the front baffle (11e) are arranged in an opposite direction; and
the front baffle (11e) of one louver sheet (11b) of every two adjacent louver sheets (11b) and the rear baffle (11d) of another louver sheet (11b) completely overlap or partially overlap to form a first air swirling region (11g).

8. The mobile power generation apparatus on railway according to claim 7, wherein the air intake hood (12) comprises a hood shell (12a) and a baffle assembly disposed in the hood shell (12a);
a front end surface of the hood shell (12a) is fixedly connected to a back surface of the window frame (11a), and an air ventilation hole (12d) at a rear end of the hood shell (12a) is fixedly connected to the air intake pipe (13);
the baffle assembly comprises one upper baffle (12b) and one lower baffle (12c), and there is a gap between the upper baffle (12b) and the lower baffle (12c); and
the upper baffle (12b) and the lower baffle (12c) partially overlap to form a second air swirling region (12e), and the upper baffle (12b) and the lower baffle (12c) are both arranged in parallel with the window frame (11a) of the air intake window (11).

9. The mobile power generation apparatus on railway according to claim 3, wherein the oil filler window (30) is an inward-opening oil filler window;
the inward-opening oil filler window comprises an oil filler window frame (3a) embedded in the oil filler window support frame (43) of the side wall body (40), an oil filler window body (3b) embedded inside an portal of the oil filler window frame (3a) through a hinge (3c), and a door lock (3d) disposed on the oil filler window body (3b);
a fixed end of the hinge (3c) is fastened on one side of an inner surface of the oil filler window frame (3a), and a connection end of the hinge (3c) is fastened on one side of the inner surface of the oil filler window body (3b);
a door lock body of the door lock (3d) is fastened on another side of the inner surface of the oil filler window body (3b), and a fixing seat of the door lock (3d) is fastened on another side of the inner surface of the oil filler window frame (3a);
an outer surface of the oil filler window frame (3a) is flush with an outer surface of the side wall body (40);
a circle of 9-shaped rubber strips (3f) is installed around the portal of the oil filler window frame (3a), and a hollow cylindrical portion (3g) of the 9-shaped rubber strip (3f) is disposed on an outer side of the portal of the oil filler window frame (3a); and
a flat portion (3h) of the 9-shaped rubber strip (3f) is disposed on an inner side of the portal of the oil filler window frame (3a) and attached to an inner wall of the portal of the oil filler window frame (3a).

10. The mobile power generation apparatus on railway according to claim 9, wherein a plurality of water leakage holes (3l) are formed on a lower crossbeam (3k) at a bottom of the oil filler window frame (3a); and
a water retaining strip (3e) is installed on a bottom surface of the portal of the oil filler window frame (3a) and located on an inner side of the oil filler window frame (3a), and a length of the water retaining strip (3e) is equal to a width of the portal of the oil filler window frame (3a).

## Patentansprüche

1. Mobile Energieerzeugungsvorrichtung auf einer Eisenbahn, umfassend ein Gehäuse (20), zwei Satz Dieselaggregate (80), eine Ölkraftstoffvorrichtung (100), ein Brandbekämpfungssystem (110), eine elektrische Vorrichtung (90) und zwei Luftabsaugvorrichtungen (70);
wobei die zwei Satz Dieselaggregate (80), die Ölkraftstoffvorrichtung (100), das Brandbekämpfungssystem (110), die elektrische Vorrichtung (90) und die beiden Luftabsaugvorrichtungen (70) alle in einem Hohlraum des Gehäuses (20) angeordnet sind;
das Gehäuse (20) eine Untergestellkomponente (20a), zwei Endwandkomponenten (20b), zwei Seitenwandkomponenten (20c) und eine obere Abdeckung (20d) umfasst;
**dadurch gekennzeichnet, dass** ein mit Bolzen auf einer Bodenplatte (21) der Untergestellkomponente (20a) befestigter Öltank (22) einen U-förmigen Querschnitt aufweist, und der Öltank (22) einen unteren Öltank (22a), einen auf einer linken Seite einer Oberseite des unteren Öltanks (22a) angeordneten, an den unteren Öltank (22a) anschließenden linken Öltank (22b) und einen auf einer rechten Seite der Oberseite dees unteren Öltanks (22a) an den unteren Öltank (22a) anschließenden rechten Öltank (22c) umfasst;
ein U-förmiger Hohlraum (22d) von einer vertikalen Innenfläche des linken Öltanks (22b), einer vertikalen Innenfläche des rechten Öltanks (22c) und der Oberseite des unteren Öltanks (22a) eingeschlossen ist und
ein Abstand von einer Oberplatte (22e) des Öltanks (22) zu einer inneren Oberseite des Gehäuses (20) 1/3 - ½ einer Höhe des Öltanks (22) beträgt.

2. Mobile Energieerzeugungsvorrichtung auf einer Eisenbahn nach Anspruch 1, wobei ein U-förmiger Raum im Inneren des Öltanks (22) mit einem Gestell (27) um ausgekleidet ist;
um den Öltank (22) herum verlaufende äußere Seitenplatten (22h) und äußere Endplatten (22i) alle auf dem Gestell (27) befestigt sind;
jede äußere Seitenplatte (22h) durch Verbinden einer oberen äußeren Seitenplatte (22k) und einer unteren äußeren Seitenplatte (22j) ausgebildet ist und jede äußere Endplatte (22i) durch Verbinden einer unteren U-förmigen Platte (221), einer linken oberen Endplatte (22n) und einer rechten oberen Endplatte (22m) ausgebildet ist;
eine Innenwand des U-förmigen Hohlraums (22d) des Öltanks (22) durch Verbinden einer inneren U-förmigen Platte (22o), einer linken oberen inneren Seitenplatte (22p) und einer rechten oberen inneren Seitenplatte (22q) ausgebildet ist;
eine Vielzahl Antiwellenplatten (28) im U-förmigen Raum des Öltanks (22) angeordnet ist;
und
die Antiwellenplatten (28) in einer unteren Schicht auf einer Bodenfläche des unteren Öltanks (22a) befestigt sind und die Antiwellenplatten (28) in einer oberen Schicht auf einer Traverse (27a) des Gestells (27) angeordnet sind.

3. Mobile Energieerzeugungsvorrichtung auf einer Eisenbahn nach Anspruch 1, wobei die Seitenwandkomponente (20c) einen Seitenwandkörper (40), einen in einem Lufteinlassschlitzgestell (41) des Seitenwandkörpers (40) installierten Lufteinlassschlitz (50), eine auf dem Seitenwandkörper (40) installierte Antennendose (42), ein auf einem dafür bestimmten Tragrahmen (43) des Seitenwandkörpers (40) installiertes Öleinfüllfenster (30), und eine auf einem Luftansaugfensterrahmen (44) des Seitenwandkörpers (40) installierte Luftansaugvorrichtung (10);
der Seitenwandkörper (40) einen Vierkantstahl (40a) eines oberen Längsträgers, einen mit einer Oberseite des Vierkantstahls (40a) verschweißten oberen Längsträger (40b), einen unteren Längsträger (40d), eine Seitenwandplatte (40f) und eine auf der Seitenwandplatte (40f) befestigte Geräuschdämpfungsplatte (40c) umfasst;
ein oberes Ende der Seitenwandplatte (40f) mit dem Vierkantstahl (40a) verschweißt ist und ein unteres Ende der Seitenwandplatte (40f) mit dem unteren Längsträger (40d) verschweißt ist und
die Geräuschdämpfungsplatte (40c) eine aus verzinkten Stahlplatten bestehende Hülle (40g), einen auf einer inneren Bodenfläche der Hülle (40g) gelegten Vliesstoff (40i) und in die Hülle (40g) eingefüllte Steinwolle (40h) umfasst;
eine L-förmige Schnittstelle (40j) an jedem der oberen und unteren Enden der Geräuschdämpfungsplatte (40c) ausgebildet ist;
die L-förmige Schnittstelle (40j) am oberen Ende der Geräuschdämpfungsplatte (40c) mit dem Vierkantstahl (40a) gepaart ist und eine obere Endfläche der L-förmigen Schnittstelle (40j) an eine Bodenfläche des oberen Längsträgers (40b) angrenzt;
die L-förmige Schnittstelle (40j) am unteren Ende der Geräuschdämpfungsplatte (40c) mit dem unteren Längsträger (40d) gepaart ist und eine untere Endfläche der L-förmigen Schnittstelle (40j) an einen Eisenboden angrenzt;
Endflächen der L-förmigen Schnittstellen (40j) an den oberen und unteren Enden der Geräuschdämpfungsplatte (40c) mit elastischen Teilen (40k) versehen sind.

4. Mobile Energieerzeugungsvorrichtung auf einer Eisenbahn nach Anspruch 3, wobei der Lufteinlassschlitz (50) ein von einem oberen Rahmen (51), einem linken Rahmen (52), einem rechten Rahmen (53), einem unteren Rahmen (54), einer vertikalen hinteren Platte (55) und einer im Schlitzgestell installierten Lamelleneinrichtung eingeschlossenes Schlitzgestell umfasst;
der obere Rahmen (51) ein oberes Lochblech (51b) und eine ortsfeste Oberplatte (51a) umfasst;
der linke Rahmen (52) einen linken Rahmenkörper (52a) und ein auf dem linken Rahmenkörper (52a) installiertes linkes Lochblech (52b) umfasst und der rechte Rahmen (53) einen rechten Rahmenkörper (53a) und ein auf dem rechten Rahmenkörper (53a) installiertes rechtes Lochblech (53b) umfasst;
der untere Rahmen (54) eine ortsfeste Unterplatte (54a) und eine mit der ortstfesten Unterplatte (54a) verbundene schräge untere Anschlussplatte (54b) umfasst, und ein Umleitungshohlraum (57) von der vertikalen hinteren Platte (55), dem unteren Rahmen (54) und der Lamelleneinrichtung eingeschlossen ist und
die Lamelleneinrichtung eine Reihe an einer Innenseite des Schlitzgestells angeschweißter innerer Lamellen (58) und eine Reihe an einer Außenseite des Schlitzgestells angeschweißter äußerer Lamellen (59) umfasst, und die inneren Lamellen (58) und die äußeren Lamellen (59) gleichmäßig und abwechselnd angeordnet sind.

5. Mobile Energieerzeugungsvorrichtung auf einer Eisenbahn nach Anspruch 4, wobei die vertikale hintere Platte (55), der linke Rahmen (52), der rechte Rahmen (53), die ortsfeste Oberplatte (51a) und der untere Rahmen (54) zusammengeschraubt oder -geschweißt sind, um einen Rahmenkörper zu bilden, und die schräge untere Anschlussplatte (54b) des unteren Rahmens (54) über eine gekrümmte Übergangsplatte (56) mit einer Unterseite der vertikalen hinteren Platte (55) verbunden ist;
seitliche Spalten zur Installation eines Schutzblechs (60) zwischen einem linken Ende der Lamelleneinrichtung und dem linken Rahmen (52) sowie zwischen einem rechten Ende der Lamelleneinrichtung und dem rechten Rahmen (53) vorhanden sind;
das Schutzblech (60) einen vertikalen Vorderkörper (60a), ein mit dem vertikalen Vorderkörper (60a) verbundenes Seitenschutzblech (60b) und einen entlang einer Kante des Seitenschutzblechs (60b) gefalteten Schutzblechflansch (60c) umfasst;
der vertikale Vorderkörper (60a) auf der linken Seite mit einer Vorderkante des linken Rahmens (52) verbunden ist und das Seitenschutzblech (60b) auf der linken Seite mit einem linken Ende der Lamelleneinrichtung verbunden ist;
der vertikale Vorderkörper (60a) auf der rechten Seite mit einer Vorderkante des rechten Rahmens (53) verbunden ist und das Seitenschutzblech (60b) auf der rechten Seite mit einem rechten Ende der Lamelleneinrichtung verbunden ist;
die Schutzblechflansche (60c) der beiden Seitenschutzbleche (60b) einander gegenüberliegend angeordnet sind und eine Wasserprallfläche (61) auf jeder der linken und rechten Seiten im Inneren des Schlitzgestells angeordnet ist;
die Wasserprallfläche (61) eine mit einer Innenwand der vertikalen hinteren Platte (55) verschweißte verschweißte Platte (61a), einen mit der verschweißten Platte (61a) verbundenen vertikalen Wasserprallflächenkörper (61b) und einen entlang einer Kante des vertikalen Wasserprallflächenkörpers (61b) gefalteten Wasserprallflächenflansch (61c) umfasst;
die Flansche (61c) der beiden Wasserprallflächen (61) einander gegenüberliegend angeordnet sind und
der Flansch (61c) der Wasserprallfläche (61) mit dem Schutzblechflansch (60c) des Schutzblechs (60) ausgefluchtet ist, oder der vertikale Körper (61b) der Wasserprallfläche (61) und das Seitenschutzblech (60b) des Schutzblechs (60) sich teilweise überlappen, um einen zweiten Filtrationsbereich (66) zu bilden.

6. Mobile Energieerzeugungsvorrichtung auf einer Eisenbahn nach Anspruch 5, wobei eine Kerbe (62) auf einer Unterseite jeder der äußeren Lamellen (59) und ein erster Spalt (64) zwischen der Kerbe (62) und den ortsfesten Unterplatten (54a) des unteren Rahmens (54) vorhanden ist, und
eine Kerbe (63) auf einer Unterseite jedes der beiden Schutzbleche (60) ausgebildet ist und ein zweiter Spalt (65) zwischen der Kerbe (63) und der ortsfesten Unterplattet (54a) des unteren Rahmens (54) vorhanden ist.

7. Mobile Energieerzeugungsvorrichtung auf einer Eisenbahn nach Anspruch 3, wobei die Luftansaugvorrichtung (10) ein Luftansaugfenster (11), ein Luftansaugrohr (13), eine das Luftansaugfenster (11) mit dem Luftansaugrohr (13) verbindende Luftansaughaube (12) und ein hinter einem Schlitzblech (11b) angeordnetes, auf der Rückseite eines Fensterrahmens (11a) befestigtes Filtersieb (11c) umfasst;
das Luftansaugfenster (11) den Fensterrahmen (11a) und eine Vielzahl im Fensterrahmen (11a) installierter Schlitzbleche (11b) umfasst, und die Vielzahl Schlitzbleche (11b) entlang einer Breiterichtung des Fensterrahmens (11a) angeordnet und aufeinandergestapelt sind;
jedes Schlitzblech (11b) eine schräge Platte (11f), eine auf einer Hinterkante der schrägen Platte (11f) installierte hintere Prallfläche (11d) und eine auf einer Vorderkante der schrägen Platte (11f) installierte vordere Prallfläche (11e) umfasst;
die hintere Prallfläche (11d) und die vordere Prallfläche (11e) in einander entgegengesetzter Richtung angeordnet sind und
die vordere Prallfläche (11e) eines Schlitzblechs (11b) aller zwei aneinander angrenzenden Schlitzbleche (11b) und die hinere Prallfläche (11d) eines anderen Schlitzblechs (11b) sich ganz oder teilweise überlappen, um einen ersten Luftdrallbereich (11g) zu bilden.

8. Mobile Energieerzeugungsvorrichtung auf einer Eisenbahn nach Anspruch 7, wobei die Luftansaughaube (12) eine Haubenhülle (12a) und eine im Inneren der Hülle (12a) angeordnete Prallflächeneinrichtung umfasst;
eine vordere Endfläche der Haubenhülle (12a) fest mit einer Rückseitenfläche des Fensterrahmens (11a) verbunden ist und eine Lüftungsöffnung (12d) an einem hinteren Ende der Hülle (12a) fest mit dem Luftansaugrohr (13) verbunden ist;
die Prallflächeneinrichtung eine obere Prallfläche (12b) und eine untere Prallfläche (12c) umfasst und ein Spalt zwischen der oberen (12b) und unteren Prallfläche (12c) vorhanden ist und
die obere (12b) und untere Prallfläche (12c) sich teilweise überlappen, um einen zweiten Luftdrallbereich (12e) zu bilden, und die obere (12b) und untere Prallfläche (12c) beide parallel zum Fensterrahmen (11a) des Luftansaugfensters (11) angeordnet sind.

9. Mobile Energieerzeugungsvorrichtung auf einer Eisenbahn nach Anspruch 3, wobei das Öleinfüllfenster (30) sich einwärts öffnet;
das sich einwärts öffnende Öleinfüllfenster einen in den Öleinfüllfenstertragrahmen (43) des Seitenwandkörpers (40) eingebetteten Öleinfüllfensterrahmen (3a), einen durch ein Scharnier (3c) hindurch in eine Öffnung des Fensterrahmens (3a) eingebetteten Öleinfüllfensterkörper (3b) und ein auf dem Fensterkörper (3b) angeordnetes Türschloss (3d) umfasst;
ein ortsfestes Ende des Scharniers (3c) auf einer Seite einer Innenfläche des Öleinfüllfensterrahmens (3a) befestigt ist, und ein Verbindungsende des Scharniers (3c) auf einer Seite der Innenfläche des Öleinfüllfensterkörpers (3b) befestigt ist;
ein Körper des Türschlosses (3d) auf einer anderen Seite der Innenfläche des Öleinfüllfensterkörpers (3b) befestigt ist und ein Befestigungssitz des Türschlosses (3d) auf einer anderen Seite der Innenfläche des Öleinfüllfensterrahmens (3a) befestigt ist;
eine Außenfläche des Öleinfüllfensterrahmens (3a) mit einer Außenfläche des Seitenwandkörpers (40) ausgefluchtet ist;
ein aus 9-förmigen Gummistreifen (3f) bestehender Kreis um die Öffnung des Öleinfüllfensterrahmens (3a) herum installiert ist und ein hohler zylindrischer Abschnitt (3g) des Gummistreifens (3f) auf einer Außenseite der Öffnung des Fensterrahmens (3a) angeordnet ist und
ein flacher Abschnitt (3h) des 9-förmigen Gummistreifens (3f) auf einer Innenseite der Öffnung des Öleinfüllfensterrahmens (3a) angeordnet und auf einer Innenwand der Öffnung des Fensterrahmens (3a) befestigt ist.

10. Mobile Energieerzeugungsvorrichtung auf einer Eisenbahn nach Anspruch 9, wobei eine Vielzahl Wasserleckageausläufe (3l) auf einer unteren Traverse (3k) auf einer Unterseite des Öleinfüllfensterrahmens (3a) ausgebildet ist und
ein Wasserrückhaltestreifen (3e) auf einer Bodenfläche der Öffnung des Öleinfüllfensterrahmens (3a) installiert und auf einer Innenseite des Fensterrahmens (3a) angeordnet ist, und eine Länge des Wasserrückhaltestreifens (3e) gleich einer Breite der Öffnung des Fensterrahmens (3a) ist.

## Revendications

1. Appareil de génération d'énergie mobile sur voie ferrée, comprenant un carter (20), deux ensembles de groupes électrogènes diesel (80), un dispositif de combustible liquide (100), un système de lutte contre l'incendie (110), un dispositif électrique (90) et deux dispositifs de sortie d'air (70) ;
dans lequel les deux ensembles de groupes électrogènes diesel (80), le dispositif de combustible liquide (100), le système de lutte contre l'incendie (110), le dispositif électrique (90) et les deux dispositifs de sortie d'air (70) sont tous disposés dans une cavité du carter (20) ;
le carter (20) comprend un composant de sous-châssis (20a), deux composants de paroi d'extrémité (20b), deux composants de paroi latérale (20c) et un couvercle supérieur (20d) ;
**caractérisé en ce qu'**un réservoir d'huile (22) fixé sur une plaque inférieure (21) du composant de sous-châssis (20a) par des boulons a une section transversale en forme de U, et le réservoir d'huile (22) comprend un réservoir d'huile inférieur (22a), un réservoir d'huile gauche (22b) disposé sur un côté gauche d'une surface supérieure du réservoir d'huile inférieur (22a) et en communication avec le réservoir d'huile inférieur (22a), et un réservoir d'huile droit (22c) disposé sur un côté droit de la surface supérieure du réservoir d'huile inférieur (22a) et en communication avec le réservoir d'huile inférieur (22a) ;
une cavité en forme de U (22d) est entourée par une surface verticale interne du réservoir d'huile gauche (22b), une surface verticale interne du réservoir d'huile droit (22c) et la surface supérieure du réservoir d'huile inférieur (22a) ; et
une distance allant d'une plaque supérieure (22e) du réservoir d'huile (22) à un sommet interne du carter (20) représente de 1/3 à 1/2 d'une hauteur du réservoir d'huile (22).

2. Appareil de génération d'énergie mobile sur voie ferrée selon la revendication 1, dans lequel un espace en forme de U à l'intérieur du réservoir d'huile (22) est recouvert avec un bâti (27) ;
des plaques latérales externes (22h) et des plaques d'extrémité externes (22i) autour du réservoir d'huile (22) sont toutes fixées sur le bâti (27) ;
chaque plaque latérale externe (22h) est formée en raccordant une plaque latérale externe supérieure (22k) et une plaque latérale externe inférieure (22j), et chaque plaque d'extrémité externe (22i) est formée en raccordant une plaque en forme de U inférieure (221), une plaque d'extrémité gauche supérieure (22n) et une plaque d'extrémité droite supérieure (22m) ;
une paroi interne de la cavité en forme de U (22d) du réservoir d'huile (22) est formée en raccordant une plaque en forme de U interne (22o), une plaque latérale interne gauche supérieure (22p) et une plaque latérale interne droite supérieure (22q) ;
une pluralité de plaques anti-ondes (28) sont disposées dans l'espace en forme de U du réservoir d'huile (22) ; et
les plaques anti-ondes (28) dans une couche inférieure, sont fixées sur une surface inférieure du réservoir d'huile inférieur (22a) et la plaque anti-ondes (28) dans une couche supérieure est montée sur une traverse (27a) du bâti (27).

3. Appareil de génération d'énergie mobile sur voie ferrée selon la revendication 1, dans lequel le composant de paroi latérale (20c) comprend un corps de paroi latérale (40), un volet d'admission d'air (50) installé dans un bâti de volet d'admission d'air (41) du corps de paroi latérale (40), un boîtier d'antenne (42) installé sur le corps de paroi latérale (40), une fenêtre de remplissage d'huile (30) disposée sur un bâti de support de fenêtre de remplissage d'huile (43) du corps de paroi latérale (40) et un dispositif d'admission d'air (10) installé sur un bâti de fenêtre d'admission d'air (44) du corps de paroi latérale (40) ;
le corps de paroi latérale (40) comprend un acier carré de poutre latérale supérieure (40a), une poutre latérale supérieure (40b) soudée sur une surface supérieure de l'acier carré de poutre latérale supérieure (40a), une poutre latérale inférieure (40d), une plaque de paroi latérale (40f) et une plaque de réduction de bruit (40c) fixée sur la plaque de paroi latérale (40f) ;
une extrémité supérieure de la plaque de paroi latérale (40f) est soudée sur l'acier carré de poutre latérale supérieure (40a) et une extrémité inférieure de la plaque de paroi latérale (40f) est soudée sur la poutre latérale inférieure (40d) ; et
la plaque de réduction de bruit (40c) comprend une coque en plaque d'acier galvanisé (40g), un tissu non tissé (40i) posé sur une surface inférieure interne de la coque en plaque d'acier galvanisé (40g), et de la laine de roche (40h) à l'intérieur de la coque en plaque d'acier galvanisé (40g) ;
une interface en forme de L (40j) est formée à chacune des extrémités supérieure et inférieure de la plaque de réduction de bruit (40c) ;
l'interface en forme de L (40j) à l'extrémité supérieure de la plaque de réduction de bruit (40c) correspond à l'acier carré de poutre latérale supérieure (40a), et une surface d'extrémité supérieure de l'interface en forme de L (40j) vient en butée sur une surface inférieure de la poutre latérale supérieure (40b) ;
l'interface en forme de L (40j) à l'extrémité inférieure de la plaque de réduction de bruit (40c) correspond à la poutre latérale inférieure (40d) et une surface d'extrémité inférieure de l'interface en forme de L (40j) vient en butée sur un plancher en fer ; et
des surfaces d'extrémité des interfaces en forme de L (40j) aux extrémités supérieure et inférieure de la plaque de réduction de bruit (40c) sont prévues avec des pièces élastiques (40k).

4. Appareil de génération d'énergie mobile sur voie ferrée selon la revendication 3, dans lequel le volet d'admission d'air (50) comprend un bâti de volet entouré par un bâti supérieur (51), un bâti gauche (52), un bâti droit (53), un bâti inférieur (54), une plaque verticale arrière (55) et un ensemble de barres de volet installé à l'intérieur du bâti de volet ;
le bâti supérieur (51) comprend une plaque perforée supérieure (51b) et une plaque fixe supérieure (51a) ;
le bâti gauche (52) comprend un corps de bâti gauche (52a) et une plaque perforée gauche (52b) installée sur le corps de bâti gauche (52a) et le bâti droit (53) comprend un corps de bâti droit (53a) et une plaque perforée droite (53b) installée sur le corps de bâti droit (53a) ;
le bâti inférieur (54) comprend une plaque fixe inférieure (54a) et une plaque de raccordement oblique inférieure (54b) raccordée à la plaque fixe inférieure (54a), et une cavité de dérivation (57) est confinée par la plaque verticale arrière (55), le bâti inférieur (54) et l'ensemble de barres de volet ; et
l'ensemble de barres de volet comprend une rangée de barres de volet internes (58) soudées sur un côté interne du bâti de volet et une rangée de barres de volet externes (59) soudées sur un côté externe du bâti de volet, et les barres de volet internes (58) et les barres de volet externes (59) sont agencées régulièrement et de manière alternée d'avant en arrière.

5. Appareil de génération d'énergie mobile sur voie ferrée selon la revendication 4, dans lequel la plaque verticale arrière (55), le bâti gauche (52), le bâti droit (53), la plaque fixe supérieure (51a) et le bâti inférieur (54) sont boulonnés ou soudés pour former un corps de bâti, et la plaque de raccordement oblique inférieure (54b) du bâti inférieur (54) est raccordée à un côté inférieur de la plaque verticale arrière (55) par le biais d'une plaque courbe de transition (56) ;
il y a des espaces latéraux pour installer des plaques de protection (60) entre une extrémité gauche de l'ensemble de barres de volet et le bâti gauche (52) et entre une extrémité droite de l'ensemble de barres de volet et le bâti droit (53) ;
la plaque de protection (60) comprend un corps de plaque de protection avant vertical (60a), une plaque de protection latérale (60b) raccordée au corps de plaque de protection avant verticale (60a) et une bride de plaque de protection (60c) pliée le long d'un bord de la plaque de protection latérale (60b) ;
le corps de plaque de protection avant verticale (60a) à gauche est raccordé à un bord avant du bâti gauche (2), et la plaque de protection latérale (60b) à gauche est raccordée à une extrémité gauche de l'ensemble de barres de volet ;
le corps de plaque de protection avant verticale (60a) à droite est raccordé à un bord avant du bâti droit (53), et la plaque de protection latérale (60b) à droite est raccordée à une extrémité droite de l'ensemble de barres de volet ;
les brides de plaque de protection (60c) des deux plaques de protection latérales (60b) sont agencées à l'opposé, et un déflecteur d'eau (61) est agencé sur chacun des côtés gauche et droit à l'intérieur du bâti de volet ;
le déflecteur d'eau (61) comprend une plaque soudée (61a) soudée à une paroi interne de la plaque verticale arrière (55), un corps de déflecteur d'eau vertical (61b) raccordé à la plaque soudée (61a) et une bride de déflecteur d'eau (61c) pliée le long d'un bord du corps de déflecteur d'eau vertical (61b) ;
les brides de déflecteur d'eau (61c) des deux déflecteurs d'eau (61) sont agencées à l'opposé ; et
la bride de déflecteur d'eau (61c) du déflecteur d'eau (61) est à fleur avec la bride de plaque de protection (60c) de la plaque de protection (60) ou le corps de déflecteur d'eau vertical (61b) du déflecteur d'eau (61) et la plaque de protection latérale (60b) de la plaque de protection (60) se chevauchent partiellement pour former une seconde zone de filtration (66).

6. Appareil de génération d'énergie mobile sur voie ferrée selon la revendication 5, dans lequel une encoche de barre de volet (62) est formée au niveau d'un fond de chacune des barres de volet externes (59), et il y a un premier espace (64) entre l'encoche de barre de volet (62) et les plaques fixes inférieures (54a) du bâti inférieur (54) ; et
une encoche de plaque de protection (63) est formée au niveau d'un fond de chacune des deux plaques de protection (60) et il y a un second espace (65) entre l'encoche de plaque de protection (63) et la plaque fixe inférieure (54a) du bâti de volet (54).

7. Appareil de génération d'énergie mobile sur voie ferrée selon la revendication 3, dans lequel le dispositif d'admission d'air (10) comprend une fenêtre d'admission d'air (11), un tuyau d'admission d'air (13), une hotte d'admission d'air (12) faisant communiquer la fenêtre d'admission d'air (11) et le tuyau d'admission d'air (13), et un tamis (11c) positionné derrière une lame de volet (11b) et fixé sur l'arrière d'un bâti de fenêtre (11a) ;
la fenêtre d'admission d'air (11) comprend le bâti de fenêtre (11a) et une pluralité de lames de volet (11b) installées dans le bâti de fenêtre (11a) et la pluralité de lames de volet (11b) sont agencées et empilées le long d'une direction de largeur du bâti de fenêtre (11a) ;
chaque lame de volet (11b) comprend une plaque inclinée (11f), un déflecteur arrière (11d) disposé sur un bord arrière de la plaque inclinée (11f), et un déflecteur avant (11e) disposé sur un bord avant de la plaque inclinée (11f) ;
le déflecteur arrière (11d) et le déflecteur avant (11e) sont agencés dans une direction opposée ; et
le déflecteur avant (11e) d'une lame de volet (11b) de toutes les deux lames de volet (11b) adjacentes et le déflecteur arrière (11d) d'une autre lame de volet (11b) se chevauchent complètement ou se chevauchent partiellement pour former une première région de tourbillon d'air (11g).

8. Appareil de génération d'énergie mobile sur voie ferrée selon la revendication 7, dans lequel la hotte d'admission d'air (12) comprend une coque de hotte (12a) et un ensemble de déflecteurs disposé dans la coque de hotte (12a) ;
une surface d'extrémité avant de la coque de hotte (12a) est raccordée, de manière fixe, à une surface arrière du bâti de fenêtre (11a) et un trou de ventilation d'air (12d) au niveau d'une extrémité arrière de la coque de hotte (12a) est raccordé au tuyau d'admission d'air (13) ;
l'ensemble de déflecteurs comprend un déflecteur supérieur (12b) et un déflecteur inférieur (12c), et il y a un espace entre le déflecteur supérieur (12b) et le déflecteur inférieur (12c) ; et
le déflecteur supérieur (12b) et le déflecteur inférieur (12c) se chevauchent partiellement afin de former une seconde région de tourbillon d'air (12e), et le déflecteur supérieur (12b) et le déflecteur inférieur (12c) sont tous deux agencés parallèlement au bâti de fenêtre (11a) de la fenêtre d'admission d'air (11).

9. Appareil de génération d'énergie mobile sur voie ferrée selon la revendication 3, dans lequel la fenêtre de remplissage d'huile (30) est une fenêtre de remplissage d'huile à ouverture vers l'intérieur ;
la fenêtre de remplissage d'huile à ouverture vers l'intérieur comprend un bâti de fenêtre de remplissage d'huile (3a) encastré dans le bâti de support de fenêtre de remplissage d'huile (43) du corps de paroi latérale (40), un corps de fenêtre de remplissage d'huile (3b) encastré à l'intérieur d'un portail du bâti de fenêtre de remplissage d'huile (3a) par le biais d'une charnière (3c), et un verrou de porte (3d) disposé sur le corps de fenêtre de remplissage d'huile (3b) ;
une extrémité fixe de la charnière (3c) est fixée sur un côté d'une surface interne du bâti de fenêtre de remplissage d'huile (3a), et une extrémité de raccordement de la charnière (3c) est fixée sur un côté de la surface interne du corps de fenêtre de remplissage d'huile (3b) ;
un corps de verrou de porte du verrou de porte (3d) est fixé sur un autre côté de la surface interne du corps de fenêtre de remplissage d'huile (3b), et un siège de fixation du verrou de porte (3d) est fixé sur un autre côté de la surface interne du bâti de fenêtre de remplissage d'huile (3a) ;
une surface externe du bâti de fenêtre de remplissage d'huile (3a) est à fleur avec une surface externe du corps de paroi latérale (40) ;
un cercle de bandes de caoutchouc en forme de 9 (3f) est installé autour du portail du bâti de fenêtre de remplissage d'huile (3a) et une partie cylindrique creuse (3g) de la bande de caoutchouc en forme de 9 (3f) est disposée sur un côté externe du portail du bâti de fenêtre de remplissage d'huile (3a) ; et
une partie plate (3h) de la bande de caoutchouc en forme de 9 (3f) est disposée sur un côté interne du portail du bâti de fenêtre de remplissage d'huile (3a) et fixée sur une paroi interne du portail du bâti de fenêtre de remplissage d'huile (3a).

10. Appareil de génération d'énergie mobile sur voie ferrée selon la revendication 9, dans lequel une pluralité de trous de fuite d'eau (3l) sont formés sur une traverse inférieure (3k) au niveau d'un fond du bâti de fenêtre de remplissage d'huile (3a) ; et
une bande de retenue d'eau (3e) est installée sur une surface inférieure du portail du bâti de fenêtre de remplissage d'huile (3a) et positionnée sur un côté interne du bâti de fenêtre de remplissage d'huile (3a) et une longueur de la bande de retenue d'eau (3e) est égale à une largeur du portail du bâti de fenêtre de remplissage d'huile (3a).
